# FASCICULE DE BREVET EUROPEEN

(11) **EP 0 654 221 B1**
(45) Date de publication et mention de la délivrance du brevet: **10.01.2001**
(21) Numéro de dépôt: 93118574.8
(22) Date de dépôt: 18.11.1993
(51) Int. Cl.: A23F 3/18

(54) **Procédé de préparation de thé noir instantané**
Verfahren zur Herstellung von schwarzem Instanttee
Process for preparing instant black tea

(43) Date de publication de la demande: 24.05.1995
(73) Titulaire: SOCIETE DES PRODUITS NESTLE S.A., 1800 Vevey (CH)
(72) Inventeur: Lunder, Tito Livio, CH-1110 Morges (CH)
(74) Mandataire: Thomas, Alain

(56) Documents cités:
- EP-A- 0 067 980
- EP-A- 0 110 391
- EP-A- 0 201 000
- GB-A- 940 867
- US-A- 4 717 579

## Description

L'invention concerne un procédé de préparation de thé noir instantané soluble dans l'eau froide.

Il est connu que les extraits à base de thé noir et notamment le thé noir instantané donne une boisson trouble à la température ambiante. Cette turbidité est provoquée par un précipité d'un complexe entre la caféine et des polyphénols, qui est désignée sous le nom de "crème de thé". Cette crème est insoluble dans l'eau froide et un certain traitement supplémentaire du thé noir extrait est habituellement nécessaire pour parvenir à une solubilité dans l'eau froide. Le brevet EP 201000 concerne déjà un procédé de préparation de thé noir instantané soluble dans l'eau froide, dans lequel on soumet le thé noir à une extraction et on soumet du thé vert à une extraction séparée et on mélange les deux extraits obtenus qu'on concentre et qu'on évapore à sec. D'autre part, dans ce procédé, on sépare déjà dans le premier extrait de thé noir la majeure partie de la crème de thé contenue dans ledit extrait par précipitation par refroidissement. L'inconvénient de ce procédé est qu'il nécessite une double extraction, ce qui sur le plan économique et industriel n'est pas acceptable, car il conduit à un surencherissement du prix du thé instantané obtenu.

Le but de la présente invention est de mettre au point un procédé, dans lequel on arrive à éliminer le problème de la crème de thé en effectuant une seule extraction. On a constaté que en prévoyant une extraction du thé noir directement en mélange avec du thé vert, il n'y a plus de crème de thé, au sens précédemment défini, et de ce fait, il n'est plus nécessaire de prévoir une étape de traitement supplémentaire pour éliminer ladite crème de thé.

L'invention concerne un procédé de préparation de thé noir instantané soluble dans l'eau froide, dans lequel on soumet un mélange de thé noir et de thé vert à une co-extraction avec de l'eau chaude à une pression comprise entre 101,3 - 202,6 kPa (1-2 atmosphères), on concentre l'extrait obtenu et on le sèche pour obtenir une poudre de thé soluble dans l'eau froide.

Bien que nous ne souhaitions pas nous lier par une théorie scientifique, il semble que le fait de faire l'extraction avec du thé vert permet de décomplexer la caféine des polyphénols du thé noir, de manière à ce qu'elle forme un autre complexe avec les polyphénols de thé vert, ledit complexe étant lui soluble à froid, de sorte qu'aucun autre traitement n'est nécessaire et permet d'obtenir directement une poudre instantanée ne donnant aucune turbidité à froid. On a constaté que le mélange thé vert avec thé noir devait respecter un certain rapport en poids, ce rapport devant être compris entre 4:1 et 2:1. Si on ajoute trop de thé vert, on diminue la couleur caractéristique du thé noir et si on ajoute trop peu de thé vert, on extrait une quantité insuffisante de polyphénols du thé vert permettant d'éviter la formation de crème caractéristique du thé noir.

Dans la présente invention, l'expression "thé vert" désigne la matière obtenue à partir de l'arbre à thé Camellia sinensis, par exemple les feuilles de thé fraîchement récoltées, les feuilles fraîches de thé vert qui sont séchées immédiatement après la récolte, les feuilles fraîches de thé vert qui ont été soumises à un traitement par la chaleur avant séchage pour inactiver leurs enzymes, et des extraits aqueux de ces feuilles. Il doit être entendu que le thé n'a subi pratiquement aucune fermentation le transformant en thé noir.

Par thé noir, dans la présente description, on entend le produit de l'oxydation enzymatique du thé vert.

L'eau chaude utilisée pour l'extraction peut être soit de l'eau préchauffée à la température souhaitée, soit de l'eau obtenue par injection directe de vapeur. La température de l'eau est comprise entre 90 et 130°C, de préférence entre 110 et 130°C, particulièrement entre 120 et 125°C.

La quantité d'eau utilisée est comprise entre 2 et 25 parties en poids d'eau, par partie de thé, de préférence entre 5 et 12 parties. La durée de l'extraction peut aller jusqu'à 30 minutes, de préférence de 2 à 30 minutes.

L'extraction des feuilles de thé se fait soit par percolation, soit à contre-courant avec toujours des feuilles de thé dans une ou plusieurs cellules avec un système de filtres évitant tout passage de particules de feuilles de thé dans l'extrait. Même avec le système de filtre, il est quand même prévu avant la concentration de l'extrait une centrifugation permettant d'éliminer les fines particules du thé.

La concentration de l'extrait chaud de thé se fait sous vide, de manière à arriver sur le système de séchage avec une teneur en matière sèche plus élevée. On concentre l'extrait de manière à avoir une teneur en matière sèche comprise entre 10 et 30%, de préférence entre 15 et 25% en poids.

Le séchage de l'extrait concentré peut être effectué soit par pulvérisation soit par lyophilisation.

On travaille dans le procédé selon l'invention, normalement à une pression comprise entre 1 et 2 atmosphères, car si on travaille à des pressions plus élevées on obtient dans l'extrait des produits indésirables.

Le procédé selon l'invention peut être mis en oeuvre en une seule étape. On a cependant constaté que si on répète le procédé décrit ci-dessus avec une quantité fraîche d'eau, on arrive à augmenter le rendement pour arriver jusqu'à 40%: dans ce cas, on fait une première extraction dans les conditions mentionnées ci-dessus, on refait une nouvelle extraction avec de l'eau fraîche dans les mêmes conditions, on combine les deux extraits qu'on concentre et qu'on sèche. L'eau utilisée pour les extractions est avantageusement de l'eau désionisée.

On obtient selon l'invention une poudre de thé noir parfaitement soluble à froid et la boisson obtenue par reconstitution avec l'eau présente une stabilité et des propriétés organoleptiques excellentes.

La suite de la description est faite en référence aux exemples.

### Exemple 1

300 g de feuilles constitués par un mélange de 200 g de thé vert et 100 g de thé noir sont introduits dans une cellule d'extraction. Un couvercle est disposé pour fermer ladite cellule et on y introduit 4500 g d'eau fraîche désionisée qui circule en circuit fermé à l'aide d'une pompe. Cette eau est portée à une température de 120°C en 45 secondes grâce à un système d'injection de vapeur. La vanne de contre-pression garantit dans le système une pression de 2 bar. L'eau circule pendant 15 minutes et l'extrait est recyclé en permanence.

Après les 15 minutes, on arrête la pompe et on introduit 2000 g d'eau fraîche désionisée de manière à laver les feuilles partiellement épuisées.

On combine l'extrait avec cette eau fraîche de lavage et on concentre pour arriver à 20% de matière sèche. On effectue alors un séchage par pulvérisation et on obtient une poudre parfaitement soluble dans l'eau froide, sans aucune turbidité. Le rendement obtenu est de 38%, c'est-à-dire qu'on obtient 114 g de poudre instantanée.

### Exemple 2

On opère comme dans l'exemple 1, sauf qu'on fait une seconde extraction avec 4500 g d'eau fraîche désionisée dans les mêmes conditions que la première étape d'extraction de l'exemple précédent. On concentre et on sèche par pulvérisation les deux extraits et on arrive à un rendement de 40%.

### Exemple 3

On opère sur un mélange de 60 g de thé vert et 20 g de thé noir. Ce mélange est introduit dans une cellule d'extraction et on effectue une première extraction avec 1200 g d'eau désionisée chauffée à 110°C pendant 15 minutes à une pression de 1,5 bar.

On effectue ensuite une seconde extraction avec 1200 g d'eau dans les mêmes conditions que la première extraction.

On combine les deux extraits qu'on concentre et qu'on sèche par pulvérisation.

On obtient une poudre de thé parfaitement soluble dans l'eau froide avec un rendement de 40%.

## Revendications

1. Procédé de préparation de thé noir instantané soluble dans l'eau froide caractérisé en ce qu'on soumet un mélange de feuilles de thé noir et de thé vert à une co-extraction avec de l'eau chaude à une pression comprise entre 101,3 - 202,6 kPa (1-2 atmosphères), on concentre l'extrait obtenu et on le sèche pour obtenir une poudre de thé soluble dans l'eau froide.

2. Procédé selon la revendication 1, caractérisé en qu'on utilise un mélange de thé vert et de thé noir dans un rapport en poids comprise entre 4:1 et 2:1.

3. Procédé selon l'une des revendications 1 ou 2, caractérisé en ce qu'on extrait le mélange de thé vert et de thé noir à une température comprise entre 90 et 130°C.

4. Procédé selon l'une des revendications 1 à 3, caractérisé en ce qu'on effectue l'extraction en une durée comprise entre 2 et 30 minutes.

5. Procédé selon l'une des revendications 1 à 4, caractérisé en ce qu'on extrait le mélange de thé avec 2 à 25 parties d'eau par partie de thé.

6. Procédé selon l'une des revendications 1 à 5, caractérisé en ce qu'on concentre l'extrait pour arriver à une teneur en matière sèche comprise entre 10 et 30%.

7. Procédé selon l'une des revendications 1 à 6, caractérisé en ce qu'on répète une seconde fois l'extraction sur les feuilles de thé noir et de thé vert épuisées avant l'étape de concentration des deux extraits obtenus.

## Patentansprüche

1. Verfahren zur Herstellung eines kaltwasserlöslichen schwarzen Instanttees, dadurch gekennzeichnet, daß man eine Mischung aus Blättern von schwarzem Tee und grünem Tee einer Koextraktion mit heißem Wasser bei einem Druck zwischen 101,3 und 202,6 kPa (1-2 Atmosphären) unterwirft, den erhaltenen Extrakt konzentriert und ihn trocknet, um ein kaltwasserlösliches Teepulver zu erhalten.

2. Verfahren nach Anspruch 1, dadurch gekennzeichnet, daß man eine Mischung aus grünem Tee und schwarzem Tee in einem Gewichtsverhältnis zwischen 4:1 und 2:1 verwendet.

3. Verfahren nach einem der Ansprüche 1 oder 2, dadurch gekennzeichnet, daß man die Mischung aus grünem Tee und schwarzem Tee bei einer Temperatur zwischen 90 und 130°C extrahiert.

4. Verfahren nach einem der Ansprüche 1 bis 3, dadurch gekennzeichnet, daß man die Extraktion innerhalb eines Zeitraums zwischen 2 und 30 min durchführt.

5. Verfahren nach einem der Ansprüche 1 bis 4, dadurch gekennzeichnet, daß man die die Teemischung mit 2 bis 25 Teilen Wasser pro Teil Tee extrahiert.

6. Verfahren nach einem der Ansprüche 1 bis 5, dadurch gekennzeichnet, daß man den Extrakt konzentriert, so daß ein Trockenmassegehalt zwischen 10 und 30% erreicht wird.

7. Verfahren nach einem der Ansprüche 1 bis 6, dadurch gekennzeichnet, daß man die Extraktion der ausgelaugten Blätter des schwarzen Tees und grünen Tees ein zweites Mal vor dem Schritt der Konzentrierung der beiden erhaltenen Extrakte wiederholt.

## Claims

1. Method for preparing cold water soluble instant black tea characterized in that a mixture of black tea leaves and green tea leaves is subjected to co-extraction with hot water at a pressure of between 101.3 and 202.6 kPa (1-2 atmospheres), and the extract obtained is concentrated and dried so as to obtain a cold water soluble tea powder.

2. Method according to claim 1, characterized in that a mixture of green tea and black tea is used in a weight ratio of between 4:1 and 2:1.

3. Method according to either of claims 1 or 2, characterized in that the mixture of green tea and black tea is extracted at a temperature of between 90 and 130°C.

4. Method according to one of claims 1 to 3, characterized in that the extraction is carried out for a period of between 2 and 30 minutes.

5. Method according to one of claims 1 to 4, characterized in that the tea mixture is extracted with 2 to 25 parts of water per 1 part of tea.

6. Method according to one of claims 1 to 5, characterized in that the extract is concentrated so as to arrive at a dry matter content of between 10 and 30 %.

7. Method according to one of claims 1 to 6, characterized in that the extraction is repeated a second time on exhausted black tea leaves and green tea leaves before the concentration step on the two extracts obtained.
